# EUROPEAN PATENT APPLICATION

(11) **EP 3 220 338 A1**
(43) Date of publication of application: **20.09.2017**
(21) Application number: 17161441.5
(22) Date of filing: 16.03.2017
(51) Int. Cl.: G06Q 30/06

(54) **A PRODUCT CHECKING SYSTEM**

(30) Priority: 17.03.2016 SE 1630057
(71) Applicant: Sandstedt, Jonas, 44165 Alingsas (SE); Isaksson, Anders, 43375 Jonsered (SE); Snygg, Göran, 43343 Partille (SE)
(72) Inventor: Sandstedt, Jonas, 44165 Alingsas (SE); Isaksson, Anders, 43375 Jonsered (SE); Snygg, Göran, 43343 Partille (SE)
(74) Representative: Sandstedt, Jonas Sven James

(57) **Abstract**

The present disclosure relates to a product checking system (5) comprising a product data input means (6), a first memory unit (7) and a processor unit (8). The processor unit (8) is arranged to identify input product data for a certain product (2) and to determine product characteristics for said product, where the first memory unit (7) comprises a product characteristics checklist (13). The processor unit (8) is further arranged to determine correlation between said determined product characteristics and the product characteristics checklist (13), and to communicate correlation and/or non-correlation between said determined product characteristics and the product characteristics checklist (13).

## Description

### TECHNICAL FIELD

The present disclosure relates to a product checking system comprising a product data input, a first memory unit, comprising a product characteristics checklist, and a processor unit. The processor unit is arranged to identify input product data for a certain product and to determine product characteristics for said product.

### BACKGROUND

When being about to buy a product, it is often desired to check that the product satisfies certain demands or requirements regarding for example contents, manufacturing processes, producer. Such demands or requirements may relate to certain needs, for example due to allergic problems as well as ethical reasons such as a desire to buy Fairtrade products, products that have not been developed by means of animal testing and/or organically manufactured goods.

Other such demands or requirements may be due to religion; for example, for food products, in some religions pork products are considered unsuitable for consuming. Furthermore, there exist many diets where focus lie on certain ingredients and/or certain relations between proteins, fat and carbohydrates.

In this context, the term "products" does not only relate to food products, but any kind of product such as for examples clothes, electric/electronic products and beauty/body care/hygiene products. Examples of demands or requirements regarding clothes may be origin, Fairtrade marking, washing requirements and materials, regarding electric/electronic products demands or requirements may for example relate to energy class/marking, country of origin and featured functions, and regarding beauty/body care/hygiene products demands or requirements may for example relate to animal testing as well as undesired ingredients.

Today, when buying a product, it is the consumer's responsibility to try to find out such demands or requirements in different ways, for example by reading a contents list or other data printed on or attached to the product itself. Reading such data may be difficult due to poor printing and/or small text, and is in any way time-consuming.

When, for example, having a party for children, there may be several such demands or requirements to take into account due to different allergic problems for a plurality of the children attending. Some allergic problems may be of a severe kind, for example nut allergy may in certain cases lead to a life-threatening condition after nut exposure. In these cases, it would be relieving to be able to check all products that are to be bought in a reliable and efficient manner.

When buying jewelry and watches, some materials are known to cause allergic reaction for some persons.

There is thus a need for a system that enables checking that a product satisfies certain demands or requirements in a reliable and efficient manner.

### SUMMARY

It is an object of the present disclosure to provide a system that enables checking that a product satisfies certain demands or requirements in a reliable and efficient manner.

Said object is obtained by means of a product checking system comprising a product data input means, a first memory unit and a processor unit. The processor unit is arranged to identify input product data for a certain product and to determine product characteristics for said product. The first memory unit comprises a product characteristics checklist, and the processor unit is further arranged to determine correlation between said determined product characteristics and the product characteristics checklist. The processor unit is also arranged to communicate correlation and/or non-correlation between said determined product characteristics and the product characteristics checklist.

Said object is also obtained by means of a product checking method comprising the steps:
- Inputting product data;
- Identifying inputted product data.
- Determining product characteristics for said product;
- Determining correlation between said determined product characteristics and a product characteristics checklist.
- Communicating correlation and/or non-correlation between said determined product characteristics and the product characteristics checklist.

According to an example, the product data input means is in the form of a hand-held imaging device.

According to another example, the product data input means is in the form of an EAN (European Article Number) code scanning device.

According to another example, the input product data is in form of a photograph.

According to another example, the photograph comprises printed information that is printed on said product, or on a label attached to said product.

According to another example, the printed information comprises at least one of an ingredient list, nutrition facts and product manufacturing data.

According to another example, the photograph comprises an EAN (European Article Number) code.

According to another example, the product checking system further comprises a second memory unit which in turn comprises product characteristics for a plurality of products. The processor unit is arranged to determine correlation between said determined product characteristics and the product characteristics checklist by comparing product characteristics for a specific product with the product characteristics checklist when said specific product has been identified via the product data input.

More examples are disclosed in the dependent claims.

A number of advantages are obtained by means of the present disclosure. Mainly a system is provided that that enables checking that a product satisfies certain demands or requirements in a reliable and efficient manner.

### BRIEF DESCRIPTION OF THE DRAWINGS

The present disclosure will now be described more in detail with reference to the appended drawings, where:
- Figure 1: shows a schematic view of a store and a product checking system according to a first example;
- Figure 2: shows a schematic view of a product checking system according to the first example, and a product that may be checked;
- Figure 3: shows a schematic view of a store and a product checking system according to a second example;
- Figure 4: shows a schematic view of a product checking system according to the second example, and a product that may be checked;
- Figure 5: shows a schematic view of a store and a product checking system according to a third example;
- Figure 6: shows a schematic view of a product checking system according to the third example, and a product that may be checked;
- Figure 7: shows a schematic view of a store and a product checking system according to a fourth example;
- Figure 8: shows a schematic view of an Internet store and a product checking system according to a fifth example; and
- Figure 9: shows a flowchart for a method according to the present disclosure.

### DETAILED DESCRIPTION

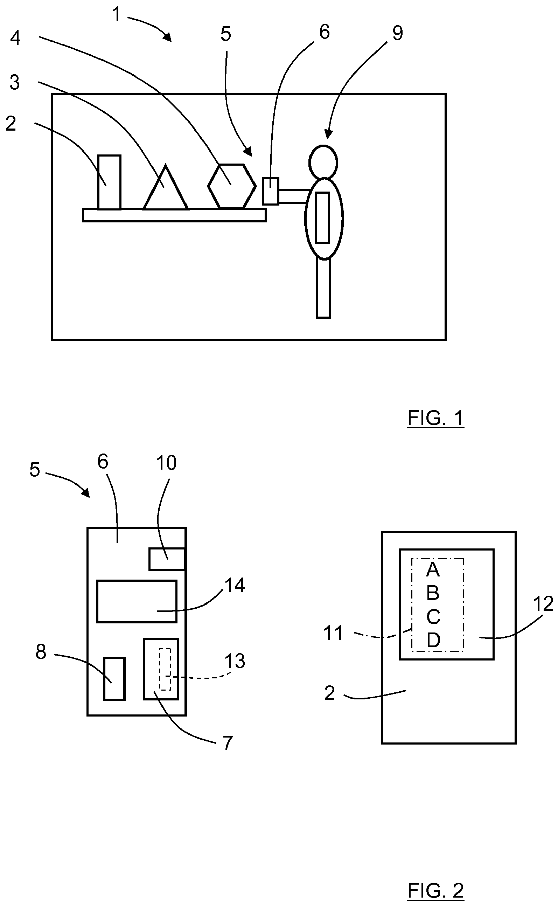

With reference to Figure 1, illustrating a first example, in a store 1 selling a plurality of different products 2, 3, 4, there is a product checking system 5 comprising a product data input means 6, here in the form of a mobile phone 6. With reference also to Figure 2, the mobile phone 6 is equipped with a camera device 10, a first memory unit 7 and a processor unit 8 that is arranged to identify input product data 8 for a certain product 2 and to determine product characteristics for said product 2.

According to the present disclosure, the first memory unit 7 comprises a product characteristics checklist 13 that has been defined by a person, a customer 9, who is about to buy a product. In this example, the processor unit 8 and the first memory unit 7 are comprised in the mobile phone 6, and the product characteristics checklist 13 comprises a plurality of ingredients that are not desired.

A customer 9 who is about to buy the product photographs a contents list 11 that is printed on a label 12 at a product 2 and requests that the processor unit 8 first identifies the input product data and determines product characteristics, and then determines correlation between said determined product characteristics and the customer's product characteristics checklist 13. The processor unit 8 is then arranged to then communicate a result in the form of information regarding correlation and/or non-correlation between said determined product characteristics and the customer's product characteristics checklist 13.

In this example, this means that the processor unit 8 first analyzes a photographed text of the contents list 11 and performs a character recognition procedure in order to determine which ingredients A, B, C are printed on the contents list 11. The processor unit 8 then compares the identified ingredients A, B, C with the ingredients stated in the customer's product characteristics checklist 13. If there are any identified ingredients that are determined to be similar to and/or identical with the ingredients stated in the customer's product characteristics checklist 13, a warning message is provided, and the ingredient or ingredients in question are shown. For example, if a first ingredient A is in the customer's product characteristics checklist 13, and of an identified ingredient is determined to be similar to and/or identical with the first ingredient A, a warning message is provided, and the first ingredient A is identified, where, in this case, the communication suitable is performed by means of a screen 14 comprised in the mobile phone 6.

Instead of ingredients, the identified text may for example relate to producer, animal testing or other ethical characteristics, as well as religious requirements.

A customer that lives in a foreign country may have severe problems when buying different products before learning the present language since ingredient or information lists on that product may be written in a foreign language, even using unknown characters. For that purposes, according to some aspects, the processor unit 8 is arranged to perform a translation following the character recognition procedure. According to some aspects, the processor unit 8 is arranged to translate to and from short and acronym lists such as for example the European E-number list and alike. Such a customer may for example be a travelling customer, a customer who has had to escape his country of origin, and may for example want to avoid food products that contain pork.

Instead of a content list, other printed information may be analyzed and checked against the customer's product characteristics checklist 13. According to some aspects, such information relates to nutrition facts regarding protein, fat and carbohydrate contents as well as other components and data presented for that product. Such data may relate to animal testing and product manufacturing data such as country of origin as well as Fairtrade markings.

The printed information that is photographed is printed on said product 2, or on a label 12 attached to said product 2.

Alternatively, the first memory unit 7 and/or the processor unit 8 may for example either be comprised in a server in which the customer rents a certain memory space, or may alternatively be provided by the store or an organization. Many stores have their own Internet homepages where customers may login, and for the system according to the present disclosure it is conceivable that a customer may log into such a homepage and create a unique product characteristics checklist that is relevant only for that particular customer. An organization according to the above may be a plurality of co-operating stores, or a customer-operated organization. The mobile phone 6 is then arranged to establish contact with the first memory unit 7 and/or the processor unit 8 via a wireless connection.

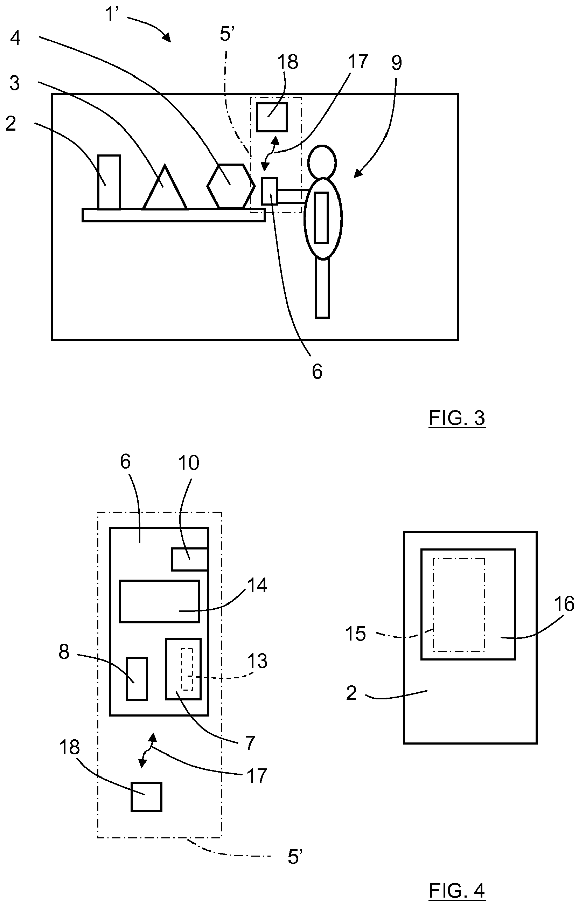

With reference to Figure 3 and Figure 4, illustrating a second example, the person 9 who is about to buy the product photographs an EAN (European Article Number) code 15 printed on a label 16 at the product 2, and via a wireless connection 17 the mobile phone 6 contacts a second memory unit 18 that is comprised in the system 5'. In this example, the second memory unit 18 is positioned and handled by the store 1, and comprises product characteristics for a plurality of the products available 2, 3, 4, or at least a plurality of these products.

The processor unit 7 is arranged to determine correlation between said determined product characteristics and the customer's product characteristics checklist 13 by comparing product characteristics for a specific product 2 with the customer's product characteristics checklist 13 when said specific product 2 has been identified via the product data input. This means that the processor unit 7 is arranged to identify a specific product 7 by means of its EAN code 15, and then to access the second memory unit 18 for accessing all product characteristics, such as for example ingredients, producer, animal testing or other ethical characteristics, that are available for the identified product 2. Then the processor unit 7 is, for example, arranged to compare the ingredients for the identified product 2 with the ingredients stated in the customer's product characteristics checklist 13. If there are any identified ingredients that are determined to be similar to and/or identical with the ingredients stated in the customer's product characteristics checklist 13, a warning message is provided, and the ingredient or ingredients in question are shown, as mentioned for the first example.

According to some aspects, if an EAN is not recognized, a customer is asked to take a photograph of the content list and possibly other printed data of the product in question, such that product characteristics of this product may be entered into the second memory unit 18. In this case, the customer is taking part of adding product characteristics to the second memory unit 18.

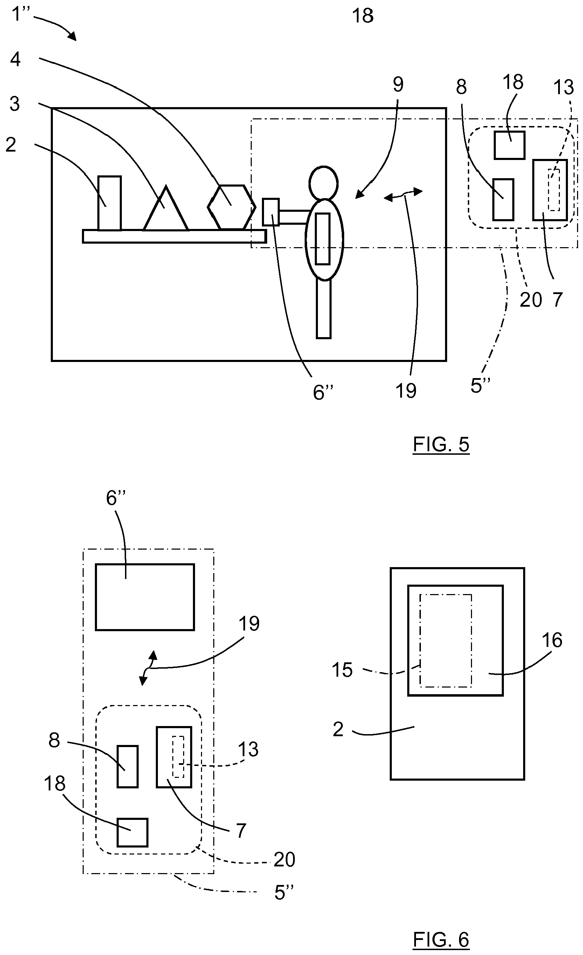

With reference to Figure 5, and 6, illustrating a third example, instead of a mobile phone, the product data input means is comprised by a scanning device 6", such as a laser scanner, for reading an EAN code 15. Such scanning devices 6" are common for self-service shopping. This means that when a customer performs self-service shopping buy means of a hand-held laser scanner 6" for reading the products that are selected for purchase, a product 2 having product characteristics that are determined to be similar to and/or identical to product characteristics present in the customer's product characteristics checklist 13, a warning message is provided, and the ingredient or ingredients in question are shown. The customer may then choose to avoid buying that particular product and for example try to choose another. It is conceivable that a substitute product is suggested as a replacement for the scanned product that did not have product characteristics determined to be similar to and/or identical to product characteristics present in the customer's product characteristics checklist 13.

In this case, the first memory unit 7, the processor unit 8 and the access the second memory unit 18 are suitably all comprised in a server 20 provided by the store. The customer's product characteristics checklist 13 has then suitable been entered previously via an Internet homepage belonging to the store as mentioned above. The hand-held laser scanner 6" communicates with the server 20 at via a wireless scanner connection 17 and possibly also wired connections (not shown) in a previously well-known manner.

According to some aspects, before a party, in particular a party for children, parents to all invited children are invited to enter data for their child in a customer's product characteristics checklist 13 via an Internet homepage.

Instead of using an EAN code, a product 2 may be identified by a photograph of the product as a whole, where the photograph is matched with different product photographs in the second memory unit 18. However, in the case of many products with more or less identical appearance, EAN code identification is suitably preferable due to its ability for unique identification.

According to some aspects, as an alternative to reading an EAN code, a mobile phone can be used for reading a Near field communication (NFC) tag that is attached to a product in order to acquire suitable information regarding the product in question,

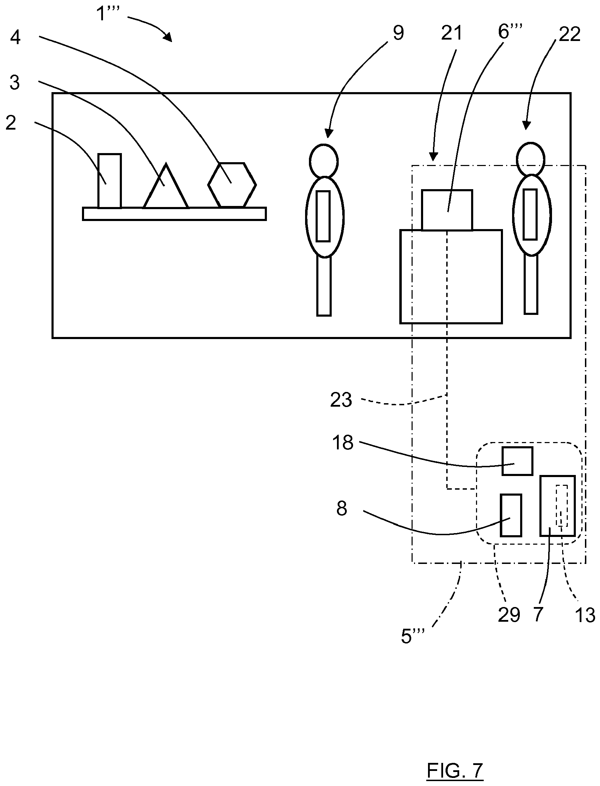

With reference to Figure 7, illustrating a fourth example, for a non self-service store 1"' not having hand-held laser scanners, the product data input means of a product checking system 5"' may be an EAN scanner device 6"' at a cashpoint 21 in the store 1"' where a cashier 22 informs the customer 9 if a product 2 has product characteristics that are determined to be similar to and/or identical to product characteristics present in the customer's product characteristics checklist 13. Here, the EAN scanner device 6"' at a cashpoint 21 is connected to a server 29 in a way similar to the previous example, here for example by means of a suitable connection 23.

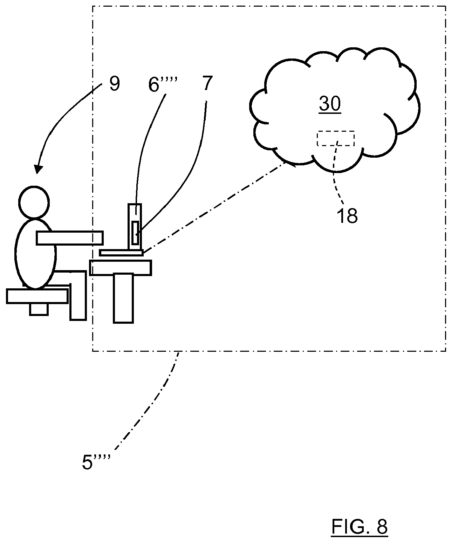

With reference to Figure 8, illustrating a fifth example, when performing on-line purchases via the Internet or any other suitable computer network, the product data input means of a product checking system 5"" is constituted by a computer 6"" used by the customer 9 for performing said on-line purchase, where it immediately may be determined whether a chosen product has product characteristics that are determined to be similar to and/or identical to product characteristics present in the customer's product characteristics checklist. The customer's product characteristics is then for example stored by the customer in a first memory unit 7 in a personal computer or similar, and the second memory unit 18 is maintained by the Internet store 30 in question.

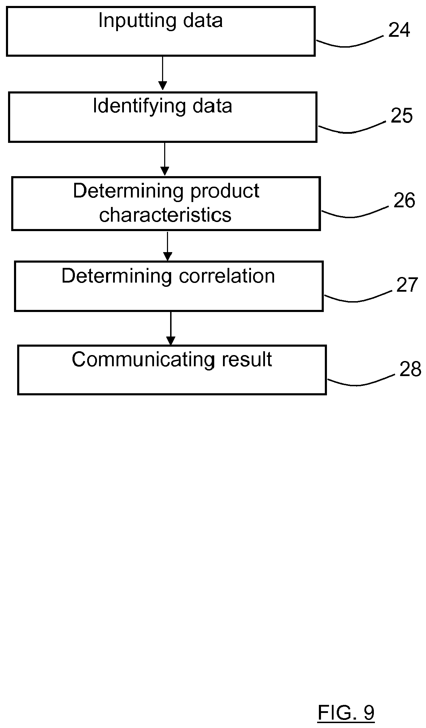

With reference to Figure 9, the present disclosure also relates to a product checking method comprising the steps:
24: Inputting product data.
25: Identifying inputted product data.
26: Determining product characteristics for said product.
27: Determining correlation between said determined product characteristics and a product characteristics checklist.
28: Communicating correlation and/or non-correlation between said determined product characteristics and the product characteristics checklist.

The present disclosure is not limited to the examples above, but may vary freely within the scope of the appended claims. For example, the first memory unit 7, second memory unit 18 and/or the processor unit 8 may for example either be comprised in a server in which the customer rents a certain memory space, or may alternatively be provided in and/or by the store or an organization. Many stores have their own Internet homepages where customers may login, and for the system according to the present disclosure it is conceivable that a customer may log into such a homepage and create a unique product characteristics checklist that is relevant only for that particular customer. An organization according to the above may be a plurality of co-operating stores, or a customer-operated organization.

The first memory unit 7, second memory unit 18 and the processor unit 8 may each be constituted by one or more electronic circuits that are physically separated or physically integrated in a common space or area. The first memory unit 7, second memory unit 18 and the processor unit 8 may all be physically separated or physically integrated in a common space or area, or even be constituted by one and the same integrated electronic circuit.

The present disclosure relates to all kinds of products and all kinds of demands and/or requirements relating to any kind of known or retrievable data regarding the product in question, which demands and/or requirements may be entered into a product characteristics checklist 13.

Examples of products are:
- food
- clothes,
- electric/electronic products
- beauty/body care/hygiene products
- audio and video
- vehicles
- household products
- furniture
- jewelry/watches

Examples of such demands and/or requirements are
- allergic problems
- ethical reasons (such as Fairtrade products, no child produced products, no animal testing and/or organically manufactured goods)
- religious reasons
- diet reasons
- country of origin
- materials used
- carbon hydroxide "footprint"
- desired functionality
- fuel/energy consumption

The present disclosure does not only relate to private customers, but also professional customers. For example for a baker that produces a certain bread, such as a Fairtrade bread, it is important that all ingredients used are Fairtrade products; many more such examples are of course conceivable.

For all types of devices that are arranged to produce photographs the term "imaging device" is generally used.

Generally, the present disclosure relates to a product checking system 5 comprising a product data input means 6, a first memory unit 7 and a processor unit 8, where the processor unit 8 is arranged to identify input product data for a certain product 2 and to determine product characteristics for said product. The first memory unit 7 comprises a product characteristics checklist 13, where the processor unit 8 further is arranged to determine correlation between said determined product characteristics and the product characteristics checklist 13, and to communicate correlation and/or non-correlation between said determined product characteristics and the product characteristics checklist 13.

According to an example, the product data input means is in the form of a hand-held imaging device 6.

According to an example, the product data input means is in the form of an EAN, European Article Number, code scanning device 6", 6"'.

According to an example, the input product data is in form of a photograph.

According to an example, the photograph comprises printed information that is printed on said product 2, or on a label 12 attached to said product 2.

According to an example, the printed information comprises at least one of an ingredient list, nutrition facts and product manufacturing data.

According to an example, the processor unit 8 is arranged to perform a character recognition procedure.

According to an example, the processor unit 8 is arranged to perform a translation of the printed information.

According to an example, the photograph comprises an EAN, European Article Number, code 15.

According to an example, the product data input means is in the form of a computer 6"" arranged for on-line purchase.

According to an example, the product checking system 5', 5", 5"' further comprises a second memory unit 18 which in turn comprises product characteristics for a plurality of products, where the processor unit 8 is arranged to determine correlation between said determined product characteristics and the product characteristics checklist 13 by comparing product characteristics for a specific product with the product characteristics checklist when said specific product has been identified via the product data input.

Generally, the present disclosure also relates to a product checking method comprising the steps:
24: inputting product data;
25: identifying inputted product data;
26: determining product characteristics for said product;
27: determining correlation between said determined product characteristics and a product characteristics checklist 13; and
28: communicating correlation and/or non-correlation between said determined product characteristics and the product characteristics checklist 13.

According to an example, the step 25 of identifying inputted product data comprises inputting one of:
- printed information on the product;
- an EAN, European Article Number, code 15; or
- a photograph of the product.

According to an example, the step 27 of determining correlation between said determined product characteristics and the product characteristics checklist 13 comprises comparing product characteristics for a specific product with the product characteristics checklist when said specific product has been identified.

## Claims

1. A product checking system (5) comprising a product data input means (6), a first memory unit (7) and a processor unit (8), where the processor unit (8) is arranged to identify input product data for a certain product (2) and to determine product characteristics for said product, **characterized in that** the first memory unit (7) comprises a product characteristics checklist (13), where the processor unit (8) further is arranged to determine correlation between said determined product characteristics and the product characteristics checklist (13), and to communicate correlation and/or non-correlation between said determined product characteristics and the product characteristics checklist (13).

2. The product checking system according to claim 1, wherein the product data input means is in the form of a hand-held imaging device (6).

3. The product checking system according to any one of the claims 1 or 2, wherein the product data input means is in the form of an EAN, European Article Number, code scanning device (6", 6"').

4. The product checking system according to any one of the claims 1 or 2, wherein the input product data is in form of a photograph.

5. The product checking system according to claim 4, wherein the photograph comprises printed information that is printed on said product (2), or on a label (12) attached to said product (2).

6. The product checking system according to claim 5, wherein the printed information comprises at least one of an ingredient list, nutrition facts and product manufacturing data.

7. The product checking system according to any one of the claims 3 or 4, wherein the processor unit (8) is arranged to perform a character recognition procedure.

8. The product checking system according to claim 7, wherein the processor unit (8) is arranged to perform a translation of the printed information.

9. The product checking system according to claim 4, wherein the photograph comprises an EAN, European Article Number, code (15).

10. The product checking system according to claim 1, wherein the product data input means is in the form of a computer (6"") arranged for on-line purchase.

11. The product checking system according to any one of the previous claims, wherein the product checking system (5', 5", 5"') further comprises a second memory unit (18) which in turn comprises product characteristics for a plurality of products, where the processor unit (8) is arranged to determine correlation between said determined product characteristics and the product characteristics checklist (13) by comparing product characteristics for a specific product with the product characteristics checklist when said specific product has been identified via the product data input.

12. A product checking method comprising the steps:
(24) inputting product data;
(25) identifying inputted product data; and
(26) determining product characteristics for said product;
**characterized in that** the method further comprises the steps:
(27) determining correlation between said determined product characteristics and a product characteristics checklist (13); and
(28) communicating correlation and/or non-correlation between said determined product characteristics and the product characteristics checklist (13).

13. The product checking method according to claim 12, wherein the step (25) of identifying inputted product data comprises inputting one of:
- printed information on the product;
- an EAN, European Article Number, code (15); or
- a photograph of the product.

14. The product checking method according to any one of the claims 12 or 13, wherein the step (27) of determining correlation between said determined product characteristics and the product characteristics checklist (13) comprises comparing product characteristics for a specific product with the product characteristics checklist when said specific product has been identified.
